# EUROPEAN PATENT SPECIFICATION

(11) **EP 0 635 390 B1**
(45) Date of publication and mention of the grant of the patent: **18.12.1996**
(21) Application number: 94111506.5
(22) Date of filing: 22.07.1994
(51) Int. Cl.: B60K 41/22, F16H 61/12

(54) **Method of controlling an automatic transmission of a commercial vehicle when accelerating from rest, and a control device operating according to said method**
Steuerverfahren für die Steuerung eines automatischen Getriebes eines Nutzfahrzeugs während Beschleunigung aus Stillstand, und Steuervorrichtung die dieses Verfahren anwendet
Méthode de commande pour une transmission automatique d'un véhicule utilitaire pendant l'accélération d'arrêt, et dispositif de commande utilisant cette méthode

(30) Priority: 23.07.1993 IT TO930554
(43) Date of publication of application: 25.01.1995
(73) Proprietor: IVECO FIAT S.p.A., 10156 Torino (IT)
(72) Inventor: Orlando, Daniele, I-25128 Brescia (IT); Barbaro, Andrea, I-10034 Chivasso (IT)
(74) Representative: Jorio, Paolo

(56) References cited:
- EP-A- 0 378 218
- EP-A- 0 450 286
- US-A- 4 475 637
- PATENT ABSTRACTS OF JAPAN vol. 10, no. 323 (M-531) 5 November 1986 & JP-A-61 129 345 (HINO MOTORS LTD) 17 June 1986
- PATENT ABSTRACTS OF JAPAN vol. 8, no. 148 (M-308) 11 July 1984 & JP-A-59 045 226 (NISSAN JIDOSHA K.K.) 14 March 1984

## Description

The present invention relates to a method of controlling an automatic transmission of a vehicle, in particular a commercial vehicle, and to a control device operating according to said method.

Automatic transmissions are known which comprise a gearbox which is associated with a fluid actuator for shifting and engaging the gears, a clutch provided with an actuator for controlling the relative engagement travel and a control unit adapted to generate control signals for respective control valves of said actuators on the basis of input signals corresponding to shifting operations by the driver and input signals which are representative of the operating conditions of the vehicle.

With reference to these latter, in particular, for controlling the clutch there are generally used an angular speed sensor of the drive shaft and a sensor of the angular speed of the input shaft of the gearbox. These sensors are generally of electromagnetic type and are disposed opposite a phonic wheel secured to the respective shaft so as to generate a sequence of frequency pulses which are proportional to the speed of rotation of the wheel itself.

In this way the absolute value of the speed of rotation of the shafts but not the direction of rotation is determined; the data concerning the absolute value of the speed is adequate in the majority of operating conditions in which the direction of rotation of the gearbox input shaft is determined univocally. However, in certain specific conditions, in particular when accelerating from rest on an incline, the control carried out in a conventional manner, namely based on the absolute value of the speed of rotation, may result in dangerous situations arising.

For example, in a situation in which the vehicle is stationary and facing downhill, with the engine running and a gear engaged, owing to the brake pedal being actuated by the driver; obviously, the clutch is disengaged. If the driver releases the brake pedal the vehicle moves at an increasing speed under the action of gravity; for obvious safety reasons, the control unit therefore has to engage the clutch when the speed of the vehicle, and thus of the input shaft, reaches a predetermined value, so as to ensure the braking action of the engine.

In the operating situation described it may happen that a reverse gear is engaged in the gearbox, for example following a preceding manoeuvre; in this case the gearbox input shaft rotates in the opposite direction to the drive shaft but the conventional processing logic units of the clutch do not detect the anomaly. Therefore, when the clutch is engaged the engine has to overcome a resisting torque which is greater than that which it is capable of generating, it stalls and is then caused to rotate in the opposite direction, thus giving rise to a dangerous situation for the engine itself and for the driver.

The object of the present invention is to provide a method of controlling an automatic transmission, by means of which it is possible to prevent the occurrence of anomalous and dangerous situations of the type indicated above when the vehicle is being accelerated from rest.

The aforementioned object is achieved by the present invention in that it relates to a method of controlling an automatic transmission of a vehicle when accelerating from rest, said transmission comprising a gearbox and a clutch interposed between a drive shaft and an input shaft of said gearbox, said method comprising a first stage of acquiring and processing a plurality of data which are representative of operating parameters of the vehicle for recognising an operating condition of movement of the vehicle on an incline with the clutch disengaged, and a second stage in which automatic engagement of the clutch is effected when said operating condition is detected, characterised in that said first stage comprises an operation of at least indirect verification of the direction of rotation of said input shaft of said gearbox with respect to the direction of rotation of said drive shaft, said second stage being implemented only if the result of said verification operation corresponds to equality between said directions of rotation.

The present invention also relates to a control device for an automatic transmission operating in accordance with the aforementioned method and comprising a control unit and a plurality of means for acquiring a plurality of data which are representative of the operating parameters of the vehicle, characterised in that said acquisition means comprise a single sensor associated with said gearbox input shaft and able to generate a signal which is representative of the absolute value of the angular speed of the shaft itself.

With a view to a better understanding of the present invention a preferred embodiment will be described non-restrictively by way of example below, with reference to the accompanying drawings, in which:
Figure 1 is a schematic view of an automatic transmission for a vehicle, provided with a control device designed in accordance with the present invention, and
Figure 2 is a logic block diagram illustrating the operations carried out by a control unit of the device in Figure 1, in accordance with the control method of the present invention.

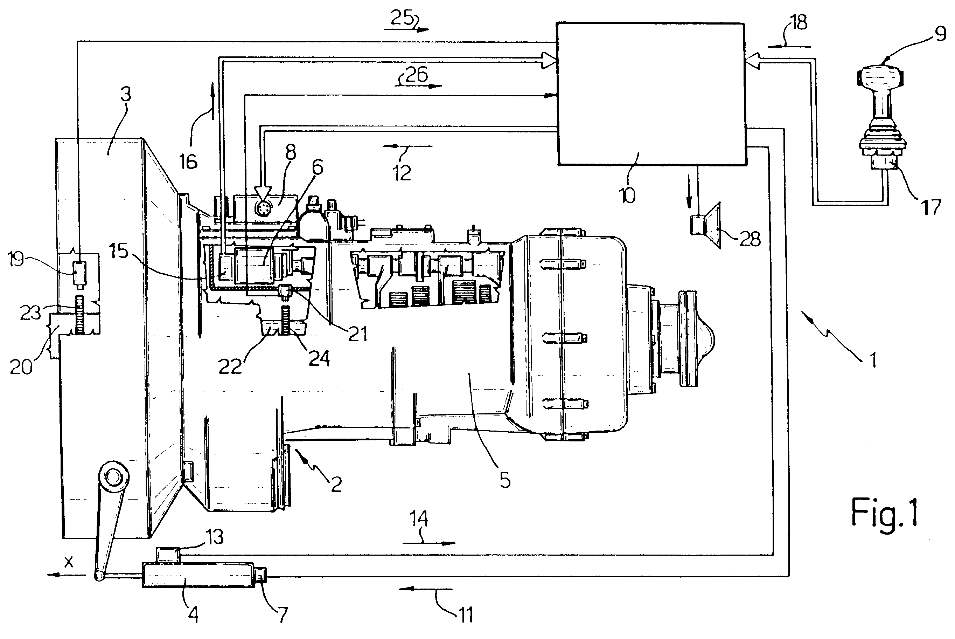

Referring now to Figure 1, the reference numeral 1 generally designates a control device for an automatic transmission of a commercial vehicle.

The transmission 2 comprises a clutch 3 controlled by a respective hydraulic actuator 4 which effects the engagement and disengagement thereof, and a gearbox 5 provided with a hydraulic or pneumatic actuator assembly 6 which is adapted to effect the shifting and engagement of the various gears. The gearbox 5 is adapted to provide, for example, sixteen forward gears and two reverse gears.

The device 1 essentially comprises a solenoid valve 7 for controlling the actuator 4 of the clutch 3, a valve assembly 8 for controlling the actuator assembly 6 of the gearbox and a microprocessor control unit 10 adapted to generate control signals 11, 12 respectively for the solenoid valve 7 and of the valve assembly 8 in response to input signals which will be described below.

In particular, the control unit 10 is connected with a position transducer 13 associated with the actuator 4 of the clutch 3 and adapted to transmit to the unit 10 a signal 14 which is indicative of the travel of the clutch itself, a plurality of sensors 15 associated with the movable members of the actuator assembly 6 and adapted to transmit to the unit 10 a plurality of signals 16 which are representative of the gear engaged, switch means 17 associated with the selector lever 9 and adapted to transmit to the unit 10 signals 18 which are representative of the manual operations applied to the lever itself, a sensor 19 of the angular speed the drive shaft 20 and a sensor 21 of the angular speed of a gearbox input shaft 22.

The sensors 19, 21 are of electromagnetic type, known per se, and are associated with respective phonic wheels 23, 24 respectively keyed on the drive shaft 20 and on the shaft 22; more precisely, the sensors 19, 21 detect the absolute value of the angular speed of said shafts by supplying to the unit 10 respective signals 25, 26 formed by a sequence of impulses with a frequency which is proportional to said speed. The result of this is that the control unit 10 does not receive any data which is representative of the direction of rotation of the shaft 22 (obviously there is only one, set direction of rotation of the drive shaft 20).

Finally, a warning device 28, for example of acoustic or illuminating type, is connected to the control unit 10.

The control unit 10 is adapted to control the actuators 4 and 6, respectively of the clutch 3 and of the gearbox 5. Control during running conditions of the vehicle takes place in substantially conventional manner and, therefore, will not be described in detail. In particular, following a manual request for a gear change by means of the lever 9, the control unit 10 controls the opening of the clutch 3 by actuating the associated actuator 4; subsequently, the requested gear is engaged and the clutch 3 is re-engaged with a suitable variation in travel.

The control unit 10 is adapted to manage automatically the condition of acceleration from rest in accordance with the method described below and forming the subject-matter of the present invention.

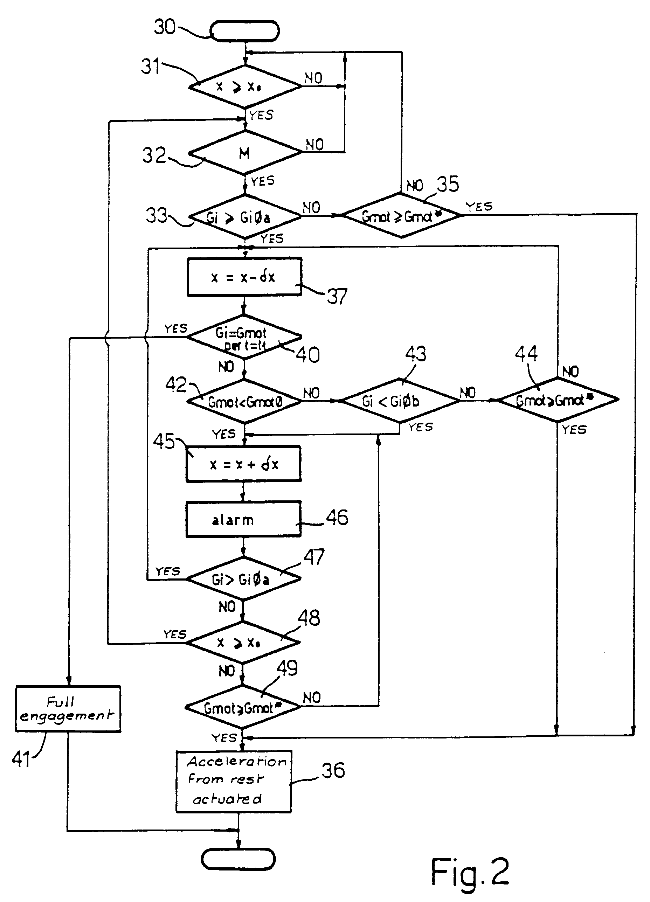

Referring now to the diagram of Figure 2, from a block 30 at the start of the cycle a block 31 is reached in which the position x of the clutch actuator (signal 14) is detected and it is verified whether the clutch 3 is disengaged (x≧xₒ). If this is not so, a return to the start of the cycle takes place; in the affirmative, however, a block 32 is reached in which it is verified whether a gear (M) is engaged. If not, a return to the start of the cycle takes place, whereas if a gear is engaged a succeeding block 33 is reached in which the modulus of the speed of rotation Gi of the input shaft 22 (signal 26) is compared with a first reference value Gi0a corresponding to a condition of the slowly moving vehicle. If Gi is less than Gi0a (namely, if the vehicle is stationary or nearly stationary), a block 35 is reached in which the modulus of the angular speed of the drive shaft Gmot (signal 25) is compared with a preset threshold value Gmot*, in relation to which it is desired to start the acceleration from rest actuated by the driver via the accelerator pedal, for example equal to 1,000 rpm.

If Gmot is lower than Gmot* a return to the start of the cycle takes place, there not having been detected the intention on the part of the driver to proceed with the acceleration from rest. However, if Gmot is higher than Gmot*, the operation passes from the block 35 to a block 36 in which the engagement of the clutch is controlled in known manner and, therefore, it is not described in detail, on the basis of experimentally determined stored maps which optimise, for each starting-off gear M, the position of the clutch as a function of Gmot.

From the block 36 the end of the cycle is reached.

The foregoing description corresponds substantially to the automatic control of the clutch when accelerating from rest on level ground, such as occurs in automatic transmissions of known type.

According to the present invention, in the case in which it is detected in block 33 that Gi is at least equal to the threshold value Gi0a, namely that the vehicle is moving at a speed higher than a preset minimum value, a block 37 is reached in which a decrement -δx is enabled (namely in the sense of engaging the clutch 3) in the travel of the actuator 4.

From the block 37 a block 40 is reached in which it is verified whether Gi is equal to Gmot for at least a preset time t1, which may be for example of the order of several tens of milliseconds.

In the affirmative, namely in the case in which the partial engagement of the clutch has brought the drive shaft 20 and the gearbox input shaft 22 into synchronism, a block 41 is reached in which the full engagement of the clutch is actuated, and then the end of the cycle is reached.

In the negative, however, a subsequent verifying block 42 is reached which compares the value of Gmot with a threshold value Gmot0 lower than Gmot* but sufficient to avoid a stalling condition of the engine.

If Gmot is higher than Gmot0 a block 43 is reached, in which the value of Gi is compared with a second reference value Gi0b lower than Gi0a. It is thus verified whether, following the partial engagement of the clutch, the gearbox input shaft 22 has been slowed down. If this is not so, a block 44 is reached in which it is verified whether Gmot is greater or equal to Gmot*. In the affirmative, said block 36 is reached; in the negative, the operation returns to the block 37.

The operation passes from the block 42 and from the block 43, in the case in which Gmot and, respectively, Gi are lower than the threshold values Gmot0 and Giob, namely if following the partial engagement of the clutch the drive shaft or the input shaft have slowed down beyond the preset limit, to reach a block 45 in which an increment +δx is actuated (namely in the sense of disengaging the clutch 3) in the travel of the actuator 4. From the block 45 a block 46 is reached in which the warning device 28 is activated.

Subsequently, a block 47 is reached in which Gi is again compared with the value Gi0a. If Gi is greater than Gi0a the block 37 is regained; if Gi is lower than Gi0a a block 48 is reached in which it is verified whether x is greater than xₒ, or whether the clutch is disengaged. In the affirmative, the block 32 is regained; in the negative, from the block 48 a block 49 is reached in which it is verified whether Gmot is greater or equal to Gmot*. If this is so, said block 36 is reached; if this is not so, the block 37 is regained.

To sum up, the mode of operation of the device 1, which is already partly evident from the foregoing, is as follows.

Starting from the condition of acceleration from rest (clutch disengaged, gear engaged), the device 1 verifies whether the speed G1 of the gearbox input shaft (in modulus) is lower or higher than a reference value Gi0a; in the first case the vehicle is substantially stationary and the manoeuvre of accelerating from rest is carried out, in known manner, by varying the travel of the clutch as a function of the number of engine revolutions, in accordance with a rule stored in memory and depending on the gear for acceleration from rest. The condition in which, on the other hand, Gi is higher than said value Gi0a obviously corresponds to the case, which potentially is quite dangerous, in which the vehicle is moving with the clutch disengaged down an incline. The device 1 is adapted to effect the engagement of the clutch automatically when the speed of the vehicle attains a preset threshold value (proportional to the value Gi0a) so as to activate the engine braking; however, this operation is only enabled if the gear engaged is in conformity with the direction of travel of the vehicle (i.e. either a forward gear if the vehicle moves forward downhill or a reverse gear if the vehicle moves backward uphill); in the contrary case, in fact, the engagement of the clutch would inevitably result in the engine stalling and cutting out, thereby placing the vehicle in a very dangerous operating situation.

In order to verify whether the input shaft 22 of the gearbox 5 is rotating in the same direction or in the opposite direction with respect to the drive shaft 20 (and therefore whether the gear engaged is or is not in conformity with the direction of movement of the vehicle), the control device 1 effects a partial engagement of the clutch in accordance with a predetermined rule, in the example described a gradient defined by a constant decrement in the value of x. The values of Gi and Gmot are determined during the engagement of clutch.

If this operation results in the drive shaft 20 and the gearbox input shaft 22 being in synchronism, in which case obviously the gear engaged is conformity with the direction of travel of the vehicle, the clutch is engaged.

If this does not occur and at least one of the values Gmot, Gi falls below the respective threshold value Gmot0, Gi0a means that the counterrotating condition of the shaft 22 with respect to the shaft 20 prevails. The verification of Gi in addition to Gmot is expedient so as to take into account the behaviour of the power unit in the various conditions of incline.

In fact, if the inclination is steep the speed of the vehicle and thus of the shaft 22 tend to increase rapidly; the resisting torque on the drive shaft 20 as a result of the partial engagement of the clutch is high and thus Gmot decreases relatively quickly. However, if the inclination is not steep the partial engagement of the clutch results in a substantial reduction in Gi by the braking action of the engine which, since it is provided with automatic fuel-supply control, will not undergo any substantial slowing down.

Following the detection of a counterrotating condition, the clutch is disengaged again (block 45), advantageously with a rule equal to that of engagement, and a warning signal is activated (block 46).

Until the driver accelerates or effects the engagement of a gear which is in conformity with the direction of travel of the vehicle, the device 1 effects the alternation of partial engagements and subsequent disengagements of the clutch, with activation of the warning signal.

However, the driver may execute at any time the stage of acceleration from rest in conventional manner by means of the accelerator pedal, thus bringing about the engagement of the clutch as a function of Gmot and on the basis of the gear engaged.

The advantages achieved with the present invention are apparent from a study of the device 1 designed in accordance with therewith.

Above all, the automatic engagement of the clutch is prevented under conditions of acceleration from rest on an incline, when the gear engaged is not in conformity with the direction of travel of the vehicle. Moreover, the detection of said condition is effected by sensors of conventional type, which are normally used to detect the angular speed of shafts in vehicle transmissions, and in particular with the use of single sensor for the gearbox input shaft. Therefore, neither additional elements nor extra production or assembly costs are introduced in relation to the known control devices.

Finally, it is evident that the device 1 described can be subject to modifications and variants which do not depart from the scope of protection of the present invention. In particular, the control of Gi to detect counterrotation may be omitted; in this case the anomaly is not detected promptly under conditions of slight inclination. The rules with which the partial engagement and subsequent disengagement of the clutch may be different from one another and non-linear. Moreover, the warning device may be of any acoustic or visual type; finally, the warning device may be omitted and the indication of the counterrotating condition may be simply assured by the anomalous sensation of fluctuation in speed noticed by the driver.

## Claims

1. A method of controlling an automatic transmission (2) of a vehicle when accelerating from rest, said transmission (2) comprising a gearbox (5) and a clutch (3) interposed between a drive shaft (20) and an input shaft (22) of said gearbox (5), said method comprising a first stage of acquiring and processing a plurality of data (x,M,Gi,Gmot) which are representative of operating parameters of the vehicle for recognising an operating condition of movement of the vehicle on an incline with the clutch disengaged, and a second stage in which automatic engagement of said clutch (3) is effected when said operating condition is detected, characterised in that said first stage comprises an operation of at least indirect verification of the direction of rotation of said input shaft (22) of said gearbox (5) with respect to the direction of rotation of said drive shaft (20), said second stage being implemented only if the result of said verifying operation corresponds to equality between said directions of rotation.

2. A method according to Claim 1, characterised in that said first stage comprises detecting the absolute value of the angular speed of said drive shaft (20) and of said input shaft (22) of said gearbox (5).

3. A method according to Claim 2, characterised in that said first stage comprises an operation of comparing the absolute value of the speed of said input shaft (22) of the gearbox (5) with a first reference value (Gi0a) corresponding to a condition of slow movement of said vehicle, said verifying operation being carried out following said comparison operation in the case in which said absolute value (Gi) of the speed of said input shaft (22) of the gearbox (5) is greater than said first reference value (Gi0a).

4. A method according to Claim 3, characterised in that said verifying operation comprises the following steps:
- carry out a partial engagement operation of said clutch (3);
- compare at least one absolute value of the angular speed (Gmot) of said drive shaft (20) with a respective first threshold value (Gmot0);
- carry out a disengagement operation of said clutch (3) if the absolute value of the angular speed (Gmot) of said drive shaft (20) is lower than said threshold value (Gmot0).

5. A method according to Claim 4, characterised in that said verifying operation stage comprises a subsequent comparison of the absolute value of the angular speed (Gi) of said input shaft (22) of the gearbox (5) with a second reference value (Gi0b) lower than said first reference value (Gi0a), said operation of disengaging said clutch (3) being carried out if at least one of the absolute value of the angular speed (Gmot) of said drive shaft (20) and the absolute value of the angular speed (Gi) of said input shaft (22) of the gearbox (5) is lower than said respective first (Gmot0) and second (Gi0b) threshold values, said second stage being enabled in the contrary case.

6. A method according to Claim 5, characterised by comprising the activation of a warning signal in the event of said verifying operation detecting that the direction of rotation of said input shaft (22) of the gearbox (5) is opposite to that of said drive shaft (20).

7. A method according to any one of Claims 4 to 6, characterised in that said partial engagement and said disengagement of said clutch (3) are carried out in accordance with a linear rule.

8. A control device (1) for an automatic transmission (2) operating in accordance with the method of any one of the preceding Claims, said transmission (2) comprising a gearbox (5) and a clutch (3) interposed between a drive shaft (20) and an input shaft (22) of said gearbox (5), said device (1) comprising a control unit (10) and a plurality of means (13,15,19,21) for acquiring a plurality of data (x,M,Gi,Gmot) which are representative of operating parameters of the vehicle, characterised in that said acquisition means comprise a respective sensors (19,21) associated with said drive shaft (20) and with said input shaft (22) of the gearbox (5), said sensors (19,21) being able to generate a signals (25,26) which is representative of the absolute value of the angular speed (Gmot, Gi) of said respective shafts (20,22).

## Patentansprüche

1. Steuerverfahren eines Automatikgetriebes (2) eines Fahrzeugs beim Beschleunigen aus dem Stillstand, wobei das Getriebe (2) ein Schaltgetriebe (5) und eine zwischen einer Antriebswelle (20) und einer Eingangswelle (22) des Schaltgetriebes (5) angeordnete Kupplung aufweist, wobei das Verfahren einen ersten Schritt aufweist, bei dem zum Erkennen eines Betriebszustandes, bei dem sich das Fahrzeug auf einer Neigung bei ausgerückter Kupplung bewegt, mehrere Daten (x, M, Gi, Gmot) beschafft und verarbeitet werden, die typisch für Betriebsparameter des Fahrzeugs sind, und wobei das Verfahren einen zweiten Schritt aufweist, bei dem ein automatisches Einrücken der Kupplung (3) bewirkt wird, wenn dieser Betriebszustand erfaßt wird,
dadurch **gekennzeichnet,** daß
der erste Schritt einen Vorgang aufweist, bei dem wenigstens indirekt die Drehrichtung der Eingangswelle (22) des Schaltgetriebes (5) bezüglich der Drehrichtung der Antriebswelle (20) überprüft wird, wobei der zweite Schritt nur dann durchgeführt wird, wenn das Ergebnis des Überprüfungsvorgangs einer Gleichheit zwischen den Drehrichtungen entspricht.

2. Verfahren nach Anspruch 1,
dadurch **gekennzeichnet,** daß
der erste Schritt das Erfassen des Absolutwerts der Winkelgeschwindigkeit der Antriebswelle (20) und der Eingangswelle (22) des Schaltgetriebes (5) aufweist.

3. Verfahren nach Anspruch 2,
dadurch **gekennzeichnet,** daß
der erste Schritt einen Vorgang aufweist, bei dem der Absolutwert der Geschwindigkeit der Eingangswelle (22) des Schaltgetriebes (5) mit einem ersten Bezugswert (Gi0a) verglichen wird, der einem Zustand einer langsamen Bewegung des Fahrzeugs entspricht, wobei der Nachprüfvorgang nach dem Vergleichsvorgang in dem Fall durchgeführt wird, bei dem der Absolutwert (Gi) der Geschwindigkeit der Eingangswelle (22) des Schaltgetriebes (5) größer als der erste Bezugswert (Gi0a) ist.

4. Verfahren nach Anspruch 3,
dadurch **gekennzeichnet,** daß
der Überprüfvorgang die folgenden Schritte aufweist:
- Durchführen eines teilweisen Einrückvorgangs der Kupplung (3);
- Vergleichen wenigstens eines Absolutwerts der Winkelgeschwindigkeit (Gmot) der Antriebswelle (20) mit einem jeweiligen ersten Schwellenwert (Gmot0);
- Durchführen eines Ausrückvorgangs der Kupplung (3), wenn der Absolutwert der Winkelgeschwindigkeit (Gmot) der Antriebswelle (20) geringer ist als der Schwellenwert (Gmot0).

5. Verfahren nach Anspruch 4,
dadurch **gekennzeichnet,** daß
der Schritt des Nachprüfvorgangs einen nachfolgenden Vergleich des Absolutwerts der Winkelgeschwindigkeit (Gi) der Eingangswelle (22) des Schaltgetriebes (5) mit einem zweiten Bezugswert (Gi0b) durchführt, der geringer ist als der erste Bezugswert (Gi0a), wobei der Vorgang des Ausrückens der Kupplung (3) dann durchgeführt wird, wenn wenigstens einer des Absolutwerts der Winkelgeschwindigkeit (Gmot) der Antriebswelle (20) und des Absolutwerts der Winkelgeschwindigkeit (Gi) der Eingangswelle (22) des Schaltgetriebes (5) geringer ist als der jeweilige erste (Gmot0) und zweite (Gi0b) Schwellenwert, wobei der zweite Schritt in dem entgegengesetzten Fall ermöglicht wird.

6. Verfahren nach Anspruch 5,
dadurch **gekennzeichnet,** daß
es ferner die Betätigung eines Warnsignals in dem Fall aufweist, daß der Überprüfvorgang ergibt, daß die Drehrichtung der Eingangswelle (22) des Schaltgetriebes (5) entgegengesetzt zu derjenigen der Antriebswelle (20) ist.

7. Verfahren nach einem der Ansprüche 4 bis 6,
dadurch **gekennzeichnet,** daß
das teilweise Einrücken und das Ausrücken der Kupplung (3) in Übereinstimmung mit einer linearen Vorschrift durchgeführt werden.

8. Steuervorrichtung (1) für ein Automatikgetriebe (2), das anhand des Verfahrens nach einem der vorangehenden Ansprüche arbeitet, wobei das Getriebe (2) ein Schaltgetriebe (5) und eine zwischen einer Antriebswelle (20) und einer Eingangswelle (22) des Schaltgetriebes (5) angeordnete Kupplung (3) aufweist, wobei die Vorrichtung (1) eine Steuereinheit (10) und mehrere Einrichtungen (13, 15, 19, 21) zur Beschaffung mehrerer Daten (x, M, Gi, Gmot) aufweist, die typisch für Betriebsparameter des Fahrzeugs sind,
dadurch **gekennzeichnet,** daß
die Beschaffungseinrichtungen jeweilige Sensoren (19, 21) aufweisen, die der Antriebswelle (20) und der Eingangswelle (22) des Schaltgetriebes (5) zugeordnet sind, wobei die Sensoren (19, 21) Signale (25, 26) erzeugen können, die typisch für den Absolutwert der Winkelgeschwindigkeit (Gmot, Gi) der jeweiligen Wellen (20, 22) sind.

## Revendications

1. Procédé de commande d'une transmission automatique (2) d'un véhicule lors de l'accélération à partir de l'arrêt, ladite transmission (2) comprenant une boîte de vitesses (5) et un embrayage (3) interposé entre un arbre d'entraînement (20) et un arbre d'entrée (22) de ladite boîte de vitesses (5), ledit procédé comprenant une première étape d'acquisition et de traitement d'une pluralité de données (x, M, Gi, Gmot), qui sont représentatives de paramètres de fonctionnement du véhicule, afin d'identifier une condition de fonctionnement du véhicule en déplacement sur une déclivité avec l'embrayage à l'état débrayé, et une seconde étape dans laquelle ledit embrayage (3) est embrayé de manière automatique lorsque ladite condition de fonctionnement est détectée, caractérisé en ce que ladite première étape comprend une opération de vérification, au moins indirecte, du sens de rotation dudit arbre d'entrée (22) de ladite boîte de vitesses (5) par rapport au sens de rotation dudit arbre d'entraînement (20), ladite seconde étape étant mise en oeuvre seulement si le résultat de ladite opération de vérification conduit à l'identité desdits sens de rotation.

2. Procédé selon la revendication 1, caractérisé en ce que ladite première étape comprend la détection de la valeur absolue de la vitesse angulaire dudit arbre d'entraînement (20) et de celle dudit arbre d'entrée (22) de ladite boîte de vitesses (5).

3. Procédé selon la revendication 2, caractérisé en ce que ladite première étape comprend une opération de comparaison de la valeur absolue de la vitesse dudit arbre d'entrée (22) de la boîte de vitesses (5), à une première valeur de référence (Gi0a) correspondant à une condition de déplacement lent dudit véhicule, ladite opération de vérification étant réalisée à la suite de ladite opération de comparaison dans le cas où ladite valeur absolue (Gi) de la vitesse dudit arbre d'entrée (22) de la boîte de vitesses (5) est supérieure à ladite première valeur de référence (Gi0a).

4. Procédé selon la revendication 3, caractérisé en ce que ladite opération de vérification comprend les étapes suivantes:
- réalisation d'une opération d'embrayage partiel dudit embrayage (3);
- comparaison d'au moins une valeur absolue de la vitesse angulaire (Gmot) dudit arbre d'entraînement (20) à une première valeur de seuil (Gmot0) respective;
- réalisation d'une opération de débrayage dudit embrayage (3) si la valeur absolue de la vitesse angulaire (Gmot) dudit arbre d'entraînement (20) est inférieure à ladite valeur de seuil (Gmot0).

5. Procédé selon la revendication 4, caractérisé en ce que ladite étape correspondant à l'opération de vérification comprend une comparaison consécutive de la valeur absolue de la vitesse angulaire (Gi) dudit arbre d'entrée (22) de la boîte de vitesses (5) à une seconde valeur de référence (Gi0b) inférieure à ladite première valeur de référence (Gi0a), ladite opération de débrayage dudit embrayage (3) étant réalisée si au moins la valeur absolue de la vitesse angulaire (Gmot) dudit arbre d'entraînement (20) ou la valeur absolue de la vitesse angulaire (Gi) dudit arbre d'entrée (22) de la boîte de vitesses (5) est inférieure auxdites première (Gmot0) et seconde (Gi0b) valeurs de seuil respectives, ladite seconde étape étant autorisée dans le cas contraire.

6. Procédé selon la revendication 5, caractérisé en ce qu'il comprend l'activation d'un signal d'alarme dans l'éventualité où ladite opération de vérification détecte que le sens de rotation dudit arbre d'entrée (22) de la boîte de vitesses (5) est opposé à celui dudit arbre d'entraînement (20).

7. Procédé selon l'une quelconque des revendications 4 à 6, caractérisé en ce que ladite opération d'embrayage partiel et ladite opération de débrayage dudit embrayage (3) sont réalisées selon une loi de variation linéaire.

8. Dispositif de commande (1) pour une transmission automatique (2) fonctionnant selon le procédé de l'une quelconque des revendications précédentes, ladite transmission (2) comprenant une boîte de vitesses (5) et un embrayage (3) interposé entre un arbre d'entraînement (20) et un arbre d'entrée (22) de ladite boîte de vitesses (5), ledit dispositif (1) comprenant une unité de commande (10) et une pluralité de moyens (13, 15, 19, 21) destinés à réaliser l'acquisition d'une pluralité de données (x, M, Gi, Gmot) qui sont représentatives de paramètres de fonctionnement du véhicule, caractérisé en ce que lesdits moyens d'acquisition comprennent des capteurs respectifs (19, 21) associés audit arbre d'entraînement (20) et audit arbre d'entrée (22) de la boîte de vitesses (5), lesdits capteurs (19, 21) étant capables de produire des signaux (25, 26) qui sont représentatifs de la valeur absolue de la vitesse angulaire (Gmot, Gi) desdits arbres (20, 22) respectifs.
